**Europäisches Patentamt**

(19) **European Patent Office**

**Office européen des brevets**

(11) Veröffentlichungsnummer: **0 045 888**
**B1**

(12) ## EUROPÄISCHE PATENTSCHRIFT

(45) Veröffentlichungstag der Patentschrift:
**23.01.85**

(51) Int. Cl.⁴: **G 01 M 3/18, G 01 M 3/16,**
**G 01 M 3/00**

(21) Anmeldenummer: **81105889.0**

(22) Anmeldetag: **25.07.81**

(54) **Einrichtung zur Feststellung von Dampfleckagen.**

(30) Priorität: **09.08.80 DE 3030296**

(43) Veröffentlichungstag der Anmeldung:
**17.02.82 Patentblatt 82/7**

(45) Bekanntmachung des Hinweises auf die Patenterteilung:
**23.01.85 Patentblatt 85/4**

(84) Benannte Vertragsstaaten:
**AT BE DE IT NL**

(56) Entgegenhaltungen:
**DE - A - 2 350 107**
**US - A - 3 413 840**
**US - A - 3 789 297**
**US - A - 3 874 222**
**US - A - 3 908 468**
**US - A - 3 911 727**

**Patents Abstracts of Japan, Band 2, Nr. 116, 27.**
**September 1978 Seite 6578E78**

(73) Patentinhaber: **Barlian, Reinhold, Dieselstrasse 6,**
**D-6990 Bad Mergentheim (DE)**

(72) Erfinder: **Barlian, Reinhold, Dieselstrasse 6, D-6990 Bad**
**Mergentheim (DE)**

(74) Vertreter: **Schroeter, Helmut et al, Bocksgasse 49,**
**D-7070 Schwäbisch Gmünd (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung bezieht sich auf eine Einrichtung zur Feststellung von Dampfleckagen in einem Hohlkörper, insbesondere Rohr, im übrigen mit den im Oberbegriff von 1 genannten Merkmalen.

Eine derartige Einrichtung ist bekanntgeworden durch die Patents Abstracts of Japan, Band 2, Nr. 116, 27. September 1978, Seite 6578E78 und JP-A-5 381 285. Dort geht es darum, festzustellen, ob aus einem Rohr, das in der Erde vergraben ist, eine Flüssigkeit austritt. Zu diesem Zweck sind außerhalb des Rohres im Erdreich Feuchtigkeitsmesser und Thermometer angeordnet, und es wird ein Signal gegeben, wenn sich sowohl die Temperatur als auch die Feuchtigkeit um einen großen Betrag ändern.

Die vorliegende Erfindung bezieht sich dagegen auf die Feststellung von Leckagen in Hohlkörpern, insbesondere Rohren, die Dampf unter Überdruck enthalten und die vorzugsweise in Kernkraftwerken Verwendung finden.

Während es nach der genannten Vorveröffentlichung kein Problem ist, im Erdreich einen Feuchtigkeitsanstieg zu messen, ist die Situation bei überhitztem Dampf anders. Dampf hoher Temperatur von z. B. 300° C ist ein idealer Nichtleiter. Ein normaler Feuchtigkeitsmesser würde auf den Austritt eines solchen Dampfes also nicht reagieren. Bei dem bevorzugten Anwendungsgebiet in Kernkraftwerken ist auch kein Erdreich vorhanden, in dem der Dampf kondensieren könnte. Zur Lösung des Problems mußten hier andere Wege beschritten werden als nach der Vorveröffentlichung.

Zur Überwachung von Heißdampfleitungen in Kernkraftwerken gab es bisher folgende Möglichkeiten:

1. Eine Inspektion durch das Betriebspersonal. Dies ist jedoch nicht kontinuierlich möglich, und in Kernkraftwerken wird das Personal gefährdet.
2. Eine Druckmessung. Hierbei können jdoch kleine Leckagen nicht erkannt werden. Druckschwankungen aus anderen Ursachen als Leckagen führen zu Fehlmeldungen.
3. Führen die Leitungen radioaktiven Dampf, so kann auch die Radioaktivität gemessen werden. Die Radioaktivität des Dampfes ist jedoch nicht konstant, wodurch sich Fehlmeldungen ergeben. Außerdem ist diese Methode unempfindlich.

Die vorliegende Erfindung geht von der Erkenntnis aus, daß vom ersten Auftreten eines unterkritischen Risses in einem Dampfrohr bis zum Bersten eine erhebliche Zeit (z. B. 60 Minuten) verstreicht. Diese Zeit reicht zum Abschalten des gefährdeten Dampfrohres aus. Erforderlich ist jedoch, daß man eine Möglichkeit hat, den Beginn eines Risses, der sich durch eine Dampfleckage zu erkennen gibt, sehr schnell festzustellen.

Durch die Erfindung soll dies ermöglicht werden. Außerdem sollen aber Fehlmeldungen weitestgehend ausgeschlossen werden.

Nach der vorliegenden Erfindung sollen, wie bei der Vorveröffentlichung, zwei verschiedene physikalische Effekte gemessen werden, die beim Austreten von Dampf, der unter Überdruck steht, auftreten. Hat der austretende Dampf Gelegenheit, sich zu entspannen, so fällt seine Temperatur ab. Dieser Temperaturabfall ist die eine Meßgröße. Andererseits soll aber das Vorhandensein von Dampf außerhalb des Hohlkörpers selbst gemessen werden, wobei der Dampf so umgewandelt werden muß, daß sein Vorhandensein meßbar wird. Dadurch, daß zwei verschiedene physikalische Effekte gemessen werden, werden in bekannter Weise Fehlmeldungen weitestgehend ausgeschlossen.

Diese Aufgabe wird durch die Erfindung nach Anspruch 1 gelöst.

Damit der austretende Dampf meßbar wird, wird in einer Wärmeisolierung des Hohlkörpers oder Rohres ein Meßraum angeordnet, und jeder der Dampfdetektoren so angeordnet, daß er mit dem Meßraum in Verbindung steht. Dampf, der aus dem Hohlkörper in den Meßraum gelangt, tritt in mindestens einen der Dampfdetektoren ein und setzt sprungartig dessen Ohmschen Widerstand wie auch dessen Kapazität herab. Mindestens einer dieser Effekte kann dann von dem Auswertgerät nach Merkmal b) festgestellt werden. Da gleichzeitig die Temperatur im Meßraum abfällt, sind nun zwei Kriterien für die Auslösung eines Alarms gegeben.

Durch die Einrichtung werden folgende Vorteile erzielt: Es wird eine kontinuierliche Überwachung ermöglicht. Die Überwachung ist auf größere Entfernung möglich, so daß eine Gefährdung des Personals ausscheidet. Auch kleine Leckmengen können sicher detektiert werden. Durch die hohe Empfindlichkeit sind unterkritische Leckstellen so rechtzeitig feststellbar, daß für eine Stillsetzung des betreffenden Anlagenteils genügend Zeit verbleibt. Es ist also keine plötzlich durchzuführende Notabschaltung, z. B. eines Kraftwerks, erforderlich. Die Einrichtung ist preiswert und läßt sich leicht warten.

Durch die US-A-3 874 222 ist eine weitere Einrichtung bekanntgeworden, die dazu dient, Rohrleitungen im Erdreich zu überwachen. Dort geht es aber darum, den Austritt von Flüssiggas festzustellen. Dort werden längs der Flüssiggasleitung lediglich Temperaturfühler angeordnet, und es wird lediglich eine Temperaturänderung gemessen. Diese Anordnung ist nicht sicher gegen Fehlalarme.

Durch die DE-A-2 350 107 soll das Auftreten von Lecks in Vakuumanlagen gemessen werden. Zu diesem Zweck wird die Anordnung so getroffen, daß sich außerhalb der Vakuumanlage ein Testmedium in Form eines organischen oder anorganischen Dampfes befindet. Dringt von diesem Testmedium etwas in die Vakuumanlage ein, so kann es dort auf einem Festkörper kondensieren oder von ihm adsorbiert werden und so dessen elektrische Leitfähigkeit ändern. Diese Anordnung bedingt, daß die gesamte Vakuumanlage von einer Umhüllung umgeben ist, die dann das Testmedium aufnimmt. Die Meßanordnung kann zu Fehlalarmen führen, die hier nur eine Meßgröße für die Auslösung eines Alarms zur Verfügung steht.

Gemäß Anspruch 2 läßt sich eine Leckage zuverlässig orten, so daß längere Sucharbeiten nach Feststellung einer Leckage vermieden werden.

Gemäß Merkmal c) von Anspruch 3 können über jeden Längsabschnitt mehrere Meßstellen verteilt werden, so daß sich in der Nähe jeder möglichen Leckstelle immer mindestens eine Meßstelle befindet. Mehrere gleiche Meßfühler pro Längsabschnitt erhöhen die Betriebssicherheit. Darüber hinaus wird eine sehr schnelle Anzeige ermöglicht.

Nach Anspruch 4 wird eine sehr einfache und damit preisgünstige Einrichtung geschaffen.

Nach Anspruch 5 erzielt man eine hohe Anzeigeempfindlichkeit und ermöglicht eine Lokalisierung der Fehlerstelle.

Nach den folgenden Unteransprüchen lassen sich verschiedenartige Fühler für Temperatur und Dampf verwenden, die alle eine empfindliche und schnelle Anzeige gewährleisten.

Ausführungsbeispiele der Erfindung werden im folgenden anhand der Zeichnungen beschrieben.

Fig. 1 zeigt perspektivisch, zum Teil im Axialschnitt einen Dampfdetektor in koaxialer Ausführung;

Fig. 2 zeigt in gleicher Darstellung einen Dampfdetektor in Klotzbauweise mit parallelen Elektroden und anschließendem Dampfzuführungsrohr;

Fig. 3 zeigt eine Variante eines Dampfdetektors nach Fig. 2;

Fig. 4 zeigt perspektivisch ein Dampfrohrstück mit Teilen zweier Isolierkassetten sowie einen Temperaturfühler und zwei Dampfdetektoren;

Fig. 5 zeigt andere Dampfdetektoren, im übrigen das gleiche wie Fig. 4.

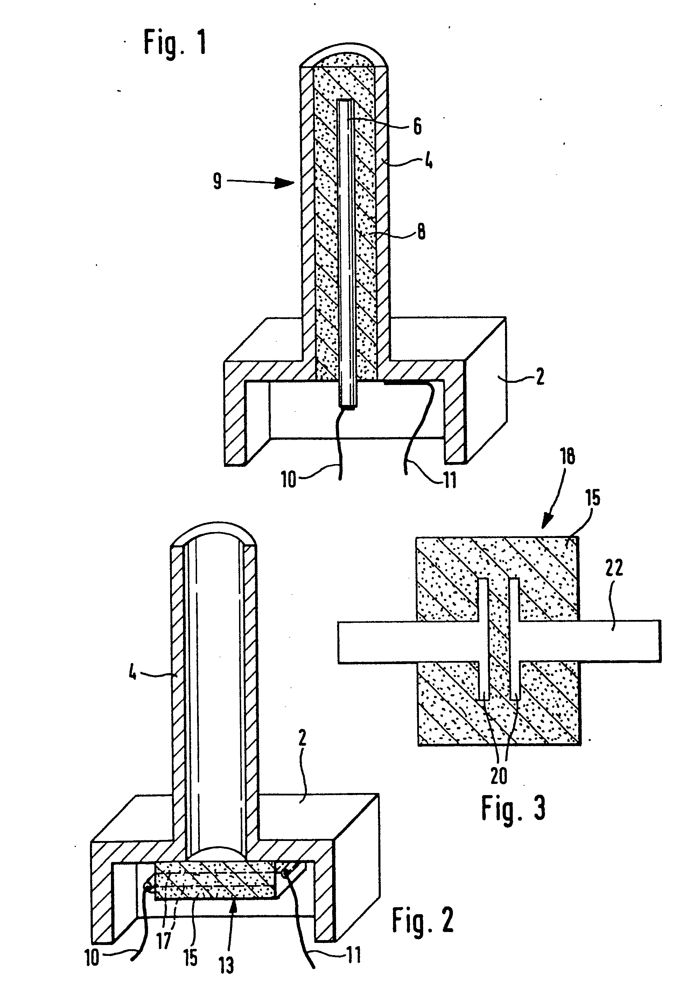

Bei den Ausführungsformen nach Fig. 1 und 2 ist jeweils ein Gehäuse 2 mit einem Rohr 4 versehen. Beide bestehen z. B. aus Stahl. Nach Fig. 1 ist zentrisch im Inneren des Gehäuses ein metallischer Stab 6 angeordnet, der nach unten in das Gehäuse 2 hineinragt, oben aber ein Stück vor dem Ende des Rohrs 4 endet. Der Raum zwischen Stab 6 und Rohr 4 und oberhalb des Stabes 6 ist durch einen Isolator 8 ausgefüllt, der hier aus Keramik oder gesinterten Glaskörnern besteht. Die Materialien von Isolator, Rohr 4 und Stab 6 sind so gewählt, daß sie etwa gleiche Wärmeausdehnungskoeffizienten haben, damit der als Ganzes mit 9 bezeichnete Dampfdetektor Wärmebeanspruchungen standhält. Der Stab 6 und das Gehäuse 2 dienen als die beiden Elektroden und sind mit Anschlußleitern 10 bzw. 11 versehen.

Bei der Ausführungsform nach Fig. 2 bleibt das Rohr 4 leer. Der eigentliche Dampfdetektor 13 ist hier im Gehäuse 2 fest angebracht, und zwar so, daß seine obere Fläche vom Rohr her frei zugänglich ist. Im Innern des Isolators 15 befinden sich zwei zueinander parallele Elektroden 17, die allseits, also auch vorne vom Isolator umgeben sind (und nur durch die Schnittdarstellung erkennbar sind). Sie sind wiederum mit Anschlußleitern 10, 11 versehen.

Fig. 3 zeigt eine Variante eines kompakten Dampfdetektors 18. Hier sind in einem Isolator 15 zwei zum Beispiel als Kreisscheiben ausgebildete Elektroden 20 angeordnet. Die Anschlußleiter 22 führen von den Elektroden nach außen.

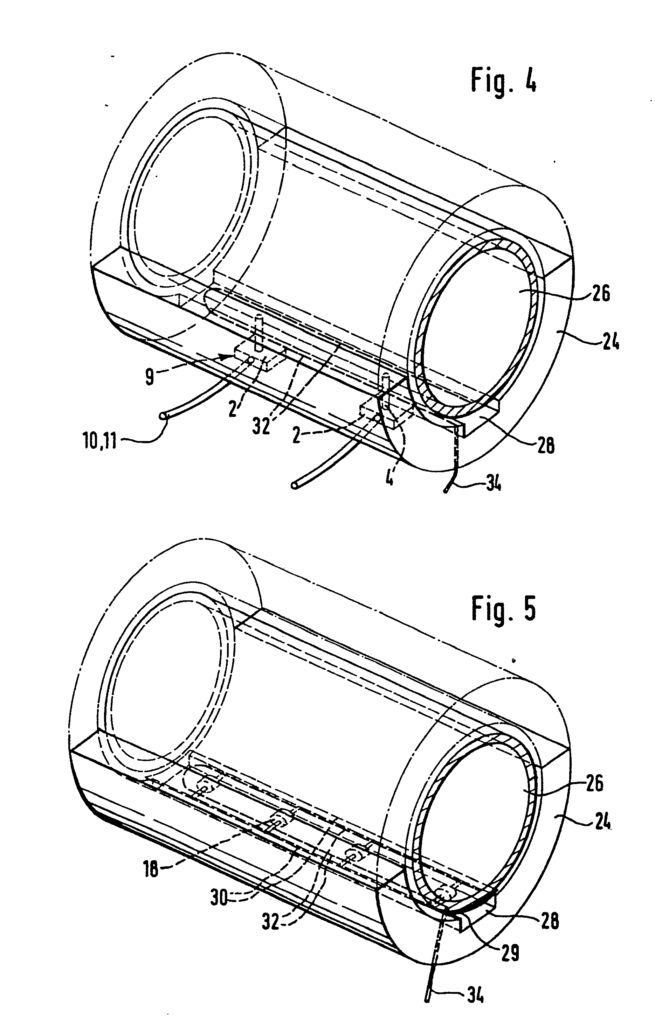

Fig. 4 und 5 zeigen jeweils ein Stück eines Dampfrohres 26, das zur Wärmeisolierung von zwei Isolierkassetten 24 umgeben ist. Die vorderen rechten Flächen der Kassetten sind in perspektivischer Stirnansicht dargestellt, während man sich die linken hinteren Stirnflächen als Schnittflächen zu denken hat. Die Isolierkassetten sind Blechgehäuse, die mit einem isolierenden Füllstoff, z. B. Glaswolle, gefüllt sind. Jede der beiden Kassetten bildet eine Halbschale, von etwa einem Meter Länge. Beide Kassetten sind durch nicht dargestellte Mittel miteinander lösbar verbunden. Sie können leicht abgenommen und wieder montiert werden. Die untere Kassette 24 enthält in Längsrichtung, gewöhnlich längs der Schweißnaht des Dampfrohrs 26, einen Meßkanal 28, der sich durch ein Lochblech 29 (Fig. 5) abdecken läßt.

Bei der Ausführungsform der Einrichtung nach Fig. 4 werden Dampfdetektoren nach Fig. 1 oder 2 verwendet, deren Rohre 4 in den Meßkanal 28 von unten her hineinragen, so daß bei einem Dampfaustritt Dampf, der in den Meßkanal 28 eingedrungen ist, entweder (Fig. 1) am oberen Ende des Rohrs 4 den Isolator 8 beaufschlagt oder (Fig. 2) durch das Rohr 4 zum Isolator 15 gelangt. Die Gehäuse 2 der Dampfdetektoren sitzen unten an der Isolierkassette 24. Die Anschlußleiter 10, 11 führen zu einem Widerstands- und/oder Kapazitätsmeßgerät, das in einem Meßraum, z. B. der Warte eines Kernkraftwerks untergebracht ist.

Bei der Ausführungsform nach Fig. 5 sind im Meßkanal 28 mehrere Dampfdetektoren 18 untergebracht, die nach Fig. 3 ausgebildet sein können aber auch innerhalb eines Keramikkörpers Elektroden beliebiger anderer Art aufweisen können. Die Dampfdetektoren 18 sind durch gestrichelt dargestellte Leitungen 30 parallelgeschaltet.

Gelangt Dampf in den Meßkanal 28, so dringt er in den Isolator mindestens eines der Dampfdetektoren ein und setzt sprungartig dessen ohmschen Widerstand wie auch dessen Kapazität herab. Mindestens einer dieser Effekte wird von dem Meßgerät festgestellt.

Wären bei den Einrichtungen nach Fig. 4 und 5 nur die Dampfdetektoren vorgesehen, so könnten sich Fehlmeldungen dann ergeben, wenn ohne einen Austritt von Dampf aus dem Rohr 26 die Isolatoren der Dampfdetektoren aus einem anderen Grunde feucht werden, z. B. dadurch, daß in den Meßkanal 28 von außen her Feuchtigkeit eindringt. Um in solchen Fällen eine Fehlmeldung auszuschalten, sind jeweils noch Temperaturfühler vorgesehen. Die Temperaturfühler können, wie in Fig. 4 und 5 dargestellt, die Form von Schleifen 32 haben. Über jeden Längsabschnitt von etwa einem Meter Länge können z. B. drei Schleifen 32 mit je einer Anschlußleitung 34 verteilt sein. Diese Anordnung ist zweckmäßig, wenn die Schleifen je ein Thermoelement beherbergen. Dieses kann als Rohr-Thermoelement ausgebildet sein, bei dem das Schutzrohr den einen Schenkel des Thermopaares bildet und ein zentrischer Leiter den anderen Schenkel. Stattdessen kann der Temperaturfühler als Mantel-Thermoelement ausgebildet sein, bei dem beide Schenkel des Thermopaares in einem Metallrohr isoliert untergebracht sind. Als strahlungsbeständiges Material für das Thermopaar eignen sich z. B. Chromnickel und Nickel. Durch die Anordnung solcher Thermoelemente in Form relativ kurzer Schleifen 32 wird erreicht, daß sich die empfindliche Stelle eines Thermoelementes in der Nähe jeder möglichen Leckstelle befindet.

Statt der dargestellten Schleifen 32 kann man einen Widerstandsfühler, z. B. einen Draht aus Nickel 1000 oder aus Platin 100 über die ganze Länge eines Längsabschnittes führen.

Die zugehörigen Auswertgeräte stellen bei einem Temperaturabfall am Ausgang der Thermoelemente einen Spannungsabfall fest, am Ausgang der Widerstandsfühler eine Verringerung des Widerstandes.

Die Dampfdetektoren und die Temperaturfühler sind mit Steckkontakten an der Außenseite der Isolierkassetten 24 verbunden. Benachbarte Isolierkassetten werden dann durch zugehörige Steckkontakte miteinander sowie mit Leitungen verbunden, die zu einer Überwachungszentrale führen. Die Leitungen haben eine hochwertige Isolation und sind gegen elektromagnetische Felder abgeschirmt. Die Signale von den Dampfdetektoren einerseits und von den Temperaturfühlern andererseits werden z. B. den Eingängen einer UND-Schaltung zugeführt, an deren Ausgang nur dann ein Signal auftritt, wenn sowohl die Dampfdetektoren Vorhandensein von Dampf oder Feuchtigkeit als auch die Temperaturfühler einen Temperaturabfall melden. Nur in diesem Falle wird vom Auswertgerät ein Ausgangssignal abgegeben, das z. B. einen Alarm auslöst, eine Anzeige bewirkt oder dergleichen.

Erwähnt sei noch, daß das Auswertgerät auch dann kein Ausgangssignal gibt, wenn im Meßkanal lediglich die Temperatur sinkt, ohne daß Dampf austritt. In diesem Falle fehlt ein Ausgangssignal der Dampfdetektoren.

Bezugszeichenliste

2   Gehäuse
4   Rohr
6   Metallstab
8   Isolator
9   Dampfdetektor
10  Anschlußleiter
11  Anschlußleiter
13  Dampfdetektor
15  Isolator
17  Elektroden
18  Dampfdetektor
20  Elektroden
22  Anschlußleiter
24  Isolierkassette
26  Dampfrohr
28  Meßkanal
29  Lochblech
30  Leitungen
32  Schleife
34  Anschlußleitung

**Patentansprüche**

1. Einrichtung zur Feststellung von Leckagen in einem Hohlkörper (26), insbesondere Rohr, mit folgenden Merkmalen:

a) Die Einrichtung hat mindestens je einen Meßfühler (9, 13, 18; 32), von denen der eine auf Temperatur und der andere auf eine weitere Meßgröße anspricht;

b) die Einrichtung hat ein Auswertgerät, das mit den Meßfühlern für Temperatur (32) und die weitere Meßgröße (9, 13, 18) in Verbindung steht und anspricht, wenn die Meßfühler gleichzeitig einen Temperaturabfall und eine Änderung der weiteren Meßgröße melden;

gekennzeichnet durch folgende Merkmale:

c) Zur Feststellung des Austritts von Dampf, der in dem Hohlkörper (26) unter Überdruck enthalten ist, sind folgende Maßnahmen vorgesehen:
c1) der Hohlkörper (26) ist von einer Wärmeisolierung (24) umgeben;
c2) ein Meßraum (28), insbesondere Meßkanal befindet sich zwischen der Außenwandung des Hohlkörpers (26) und der Innenwandung des Wärmeisolators (24);
c3) der Meßfühler (9, 13, 18) für die weitere Meßgröße ist ein Dampfdetektor, der nach Art eines elektrischen Kondensators mit einem porösen, von außen frei zugänglichen Isolator (8, 15) aufgebaut ist (Fig. 1 bis 3).

2. Einrichtung nach Anspruch 1, gekennzeichnet durch folgende Merkmale:

a) Die Wärmeisolierung (24), die ein Dampf führendes Rohr (26) umgibt, ist in Längsabschnitte unterteilt,
b2) die in bzw. an verschiedenen Längsabschnitten untergebrachten Temperaturfühler (32) und Dampfdetektoren (9, 13, 18) sind je Längsabschnitt für sich mit dem Auswertgerät verbunden.

3. Einrichtung nach Anspruch 2, gekennzeichnet durch folgende Merkmale:

a) Die Längsabschnitte der Wärmeisolierung (24) sind in (insbesondere zwei) Segmentschalen (Isolierkassetten 24) unterteilt;

b) innerhalb mindestens einer der Segmentschalen (24) ist der Meßraum in Form eines Meßkanals (28) vorgesehen, der insbesondere längs einer Schweißnaht des Dampfrohrs (26) verläuft;

c) verteilt über die Länge des Maßkanals (28) eines Längsabschnittes sind mehrere Temperaturfühler (32) und Dampfdetektoren (9, 13, 18) vorgesehen.

4. Einrichtung nach Anspruch 3, dadurch gekennzeichnet, daß die Signalausgänge der zu einem Längsabschnitt gehörigen Dampfdetektoren (18) zueinander parallelgeschaltet sind (Fig. 5).

5. Einrichtung nach Anspruch 3 oder 4, dadurch gekennzeichnet, daß die Signalausgänge der zu einem Längsabschnitt gehörigen Temperaturfühler (32) je für sich mit dem Auswertgerät verbunden sind.

6. Einrichtung nach einem der vorangehenden Ansprüche, dadurch gekennzeichnet, daß die Temperaturfühler (32) Widerstandsfühler sind.

7. Einrichtung nach einem der Ansprüche 1 bis 5, dadurch gekennzeichnet, daß die Temperaturfühler (32) Thermoelemente sind.

8. Einrichtung nach Anspruch 1, dadurch gekennzeichnet, daß die Dampfdetektoren (13) an der Außenfläche der Segmentschalen angebracht sind und durch ein Rohr (4) mit dem Meßkanal (28) in Verbindung stehen (Fig. 2 und 4).

9. Einrichtung nach Anspruch 1, dadurch gekennzeichnet, daß die Dampfdetektoren (9) in je einem Rohr (4) untergebracht sind, das durch die Segmentschale in den Meßkanal hineinragt (Fig. 1 und 4).

**Claims**

1. A device for the determination of leakages in a hollow body (26), particularly a pipe, having the following features:

(a) The device comprises, at least, one measuring sensor (9, 13, 18; 32) each, one of which responding to temperature and the other one to a further measuring value;

(b) the device comprises an evaluation instrument, which is in connection with the measuring sensors for temperature (32) and the further measuring value (9, 13, 18) and responds, if the measuring sensors simultaneously announce drop in temperature and a change of the further measuring value;

characterized by the following features:

(c) For the determination of the exhaust of steam, which is contained at overpressure in the hollow body (26), the following measures are provided:
(c1) the hollow body (26) is surrounded by a heat insulation (24);
(c2) a measuring space (28), particularly a measuring conduit, is positioned between the outer wall of the hollow body (26) and the inner wall of the heat insulation (24);
(c3) the measuring sensor (9, 13, 18) fot the further measuring value is a steam detector, which is provided with a porous insulator (8, 15), freely accessible from the outside, in the manner of an electrical capacitor (figure 1 through 3).

2. Device according to claim 1, characterized by the following features:

(a) The heat insulation (24), which surrounds a pipe (26), containing steam, is subbivided into longitudinal sections;

(b) the temperature sensors (32) and steam detectors (9, 13, 18), arranged in and/or on different longitudinal sections, are connected to the evaluation instrument per longitudinal section per se.

3. Device according to claim 2, characterized by the following features:

(a) The longitudinal sections of the heat insulation (24) are subdivided into (particularly two) segmental shells (insulating cassettes 24);

(b) within, at least, one of the segmental shells (24) the measuring space is provided in the form of a measuring conduit (28), extending particularly along a welding seam of the steam pipe (26);

(c) distributed along the length of the measuring conduit (28) of a longitudinal section, a plurality of temperature sensors (32) and steam detectors (9, 13, 18) are provided.

4. Device according to claim 3, characterized in that the signal outputs of the steam detectors (18) belonging to a longitudinal section are connected in parallel with one another (figure 5).

5. Device according to claim 3 or claim 4, characterized in that the signal outputs of the temperature sensors (32) belonging to a longitudinal section are connected to the evaluation instrument in each case by themselves.

6. Device according to one of the preceding claims, characterized in that the temperature sensors (32) are resistance sensors.

7. Device according to one of claims 1 through 5, characterized in that the temperature sensors (32) are thermoelectric couples (thermoelements).

8. Device according to claim 1, characterized in that the steam detectors (13) are provided on the outside of the segmental shells and are in communication with the measuring conduit (28) by a pipe (4) (figures 2 and 4).

9. Device according to claim 1, characterized in that the steam detectors (9) are provided in each case in a pipe (4), projecting through the segmental shell into the measuring conduit (figures 1 and 4).

## Revendications

1. Dispositif pour la constatation de fuites dans un corps creux (26), en particulier tuyau, faisant état des éléments suivants:

a) le dispositif comporte au moins deux détecteurs (9, 13, 18, 32), dont l'un réagit à la température et l'autre à une autre grandeur de mesure;

b) le dispositif comporte un appareil d'évaluation, qui est en liaison avec les détecteurs de température (32) et l'autre grandeur de mesure (9, 13, 18), et qui réagit lorsque les détecteurs signalent simultanément une baisse de température et un changement de l'autre grandeur de mesure;

caractérisé par les éléments suivants:

c) pour la détection de la sortie de vapeur, qui est contenue dans le corps creux (26) sous surpression, sont prévues les mesures suivantes:

c1) le corps cruex (26) est entouré d'une isolation thermique (24) ;

c2) un espace de mesure (28), en particulier canal de mesure, est situé entre la paroi extérieure du corps creux (26) et la paroi intérieure de l'isolant thermique (24);

c3) le détecteur (9, 13, 18) pour l'autre grandeur de mesure est un détecteur de vapeur, qui est constitué sous la forme d'un condensateur électrique muni d'un isolateur (8, 15) poreux, accessible de l'extérieur (figures 1 à 3).

2. Dispositif selon la revendication 1, caractérisé par les éléments suivants:

a) l'isolation thermique (24), qui entoure un tuyau (26) parcouru par de la vapeur, est subdivisée en tronçons longitudinaux;

b) les détecteurs de température (32) et les détecteurs de vapeur (9, 13, 18) disposés dans ou à différents tronçons longitudinaux sont reliés, par tronçon longitudinal, individuellement à l'appareil d'évaluation.

3. Dispositif selon la revendication 2, caractérisé par les éléments suivants:

a) les tronçons longitudinaux de l'isolation thermique (24) sont subdivisés en (en particulier deux) coquilles segmentées (cassettes d'isolation 24);

b) à l'intérieur d'au moins une des coquilles segmentées (24) est prévu l'espace de mesure sous forme d'un canal de mesure (28), qui s'étend, en particulier, le long d'un joint de soudure du tuyau à vapeur (26);

c) plusieurs détecteurs de température (32) et détecteurs de vapeur (9, 13, 18) sont répartis sur la longueur du canal de mesure (28) d'un tronçon longitudinal.

4. Dispositif selon la revendication 3, caractérisé en ce que les sorties de signal des détecteurs de vapeur (18) d'un tronçon longitudinal sont branchées en parallèle (figure 5).

5. Dispositif selon la revendication 3 ou 4, caractérisé en ce que les sorties de signal des détecteurs de température (32) d'un tronçon longitudinal, sont reliées séparément à l'appareil d'évaluation.

6. Dispositif selon l'une des revendications précédentes, caractérisé en ce que les détecteurs de température (32) sont des détecteurs à résistance.

7. Dispositif selon l'une des revendications 1 à 5, caractérisé en ce que les détecteurs de température (32) sont des éléments thermo-électriques.

8. Dispositif selon la revendication 1, caractérisé en ce que les détecteurs de vapeur (13) sont disposés à la paroi extérieure des coquilles segmentées, et sont en liaison avec le canal de mesure (28) au moyen d'un tube (4) (figures 2 et 4).

9. Dispositif selon la revendication 1, caractérisé en ce que les détecteurs de vapeur (9) sont disposés chacun dans un tube (4) qui fait saillie dans le canal de mesure à travers la coquille segmentée (figures 1 et 4).

Fig. 1

9

6

4

8

10    11

2

18

15

22

20

Fig. 3

4

2

Fig. 2

10    17    15    13    11

Fig. 4

Fig. 5